(19) Europäisches Patentamt

European Patent Office

Office européen des brevets

(11) EP 0 869 384 A1

(12) EUROPEAN PATENT APPLICATION
published in accordance with Art. 158(3) EPC

(43) Date of publication:
07.10.1998 Bulletin 1998/41

(51) Int. Cl.$^6$: G02B 26/10

(21) Application number: 96939353.7

(86) International application number:
PCT/JP96/03538

(22) Date of filing: 03.12.1996

(87) International publication number:
WO 97/21132 (12.06.1997 Gazette 1997/25)

(84) Designated Contracting States:
DE

(30) Priority: 04.12.1995 JP 344629/95

(71) Applicant: KOMATSU LTD.
Minato-ku, Tokyo 107 (JP)

(72) Inventor: CHIBA, Teiichiro
Hiratsuka-shi, Kanagawa 254 (JP)

(74) Representative:
Meissner, Peter E., Dipl.-Ing. et al
Meissner & Meissner,
Patentanwaltsbüro,
Hohenzollerndamm 89
14199 Berlin (DE)

(54) MIRROR ANGLE DETECTOR AND DETECTION METHOD

(57) A mirror angle detecting apparatus and detecting method which enable the angle deviation of a movable mirror to be detected in an infinitesimal angle range normally used and which also permits reduction in size of optical machining equipment. For this purpose, a first mirror (9) for reflecting a main laser beam (95) is formed on or attached to one surface of a movable mirror (82) and a second mirror (2) for reflecting a position detecting beam (10) and leading it to a position sensor (3) is formed on or attached to the other surface thereof. An image forming lens (5) is provided in an optical path through which the position detecting beam reflected by the movable mirror propagates, and the position sensor (3) for receiving the beam from the image forming lens is disposed in the image focal position of the image forming lens. An optical system (6, 7) constituting an afocal system or an optical system (11, 12, 13) which extends the optical path by repeating reflection may be provided in the optical path between the movable mirror and the image forming lens.

# F I G. 4

EP 0 869 384 A1

## Description

Field of the Invention

The present invention relates to an angle detecting apparatus and detecting method for a movable mirror in optical machining equipment which employs a galvanometer type optical scanner to scan with an optical beam for machining.

Background Art

As an optical machining apparatus which uses optical beams for scanning to perform machining, there are, for example, a trimming apparatus for thick films and thin films and a laser marking apparatus for marking the surfaces of semiconductor packages, etc. with patterns and/or characters. These apparatuses launch an optical beam onto a movable mirror, which rotates at high speed, and apply the reflected beam to the surface of a workpiece. Conventionally, a galvanometer type optical scanner (hereinafter referred to as "galvanoscanner") has been used as an actuator for rotating the movable mirror. Generally, the galvanoscanner incorporates a position detecting sensor; the output of the position detecting sensor is susceptible to temperature drift, so that changes in ambient temperature causes a drift in the angle at which the galvanoscanner stops.

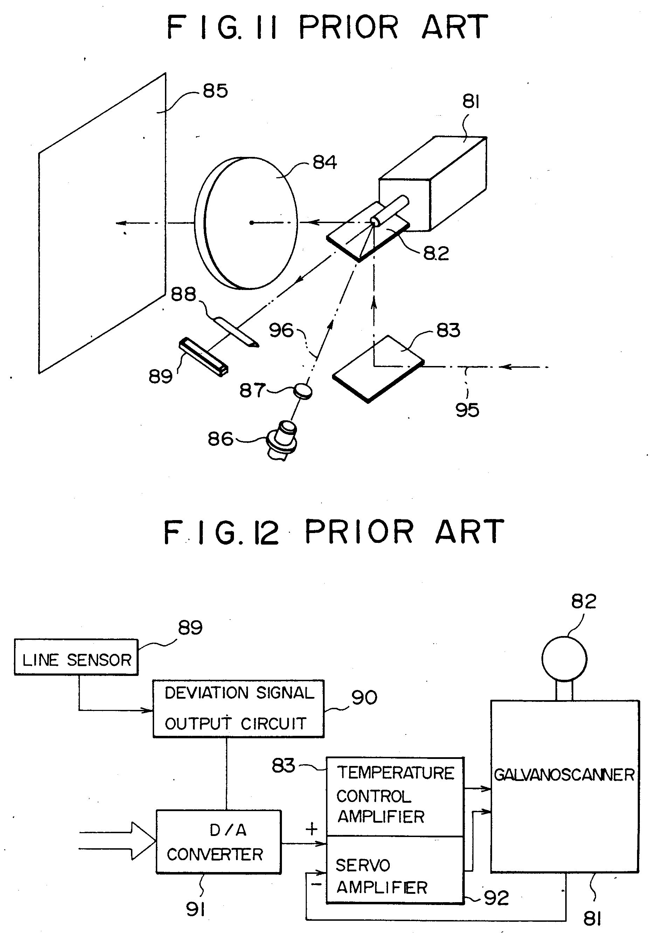

To solve the temperature drift problem, there have conventionally been various proposals for correcting the rotational angle of the galvanoscanner. For instance, Japanese Published Unexamined Utility Model Application No. 3-49522 has disclosed an example of a laser beam scanner equipped with a correcting means for a position detecting sensor as shown in Fig. 11 and Fig. 12. Fig. 11 and Fig. 12 are block diagrams which illustrate the configuration and a control system, respectively, of the laser beam scanner which has the means for correcting the angle of the movable mirror; description will be given with reference to the drawings.

A main laser beam 95 for machining is applied at a predetermined angle (e.g. 45 degrees) to a movable mirror 82 which is rotated by a galvanoscanner 81, and the reflected beam is focused onto a specimen surface 85 of a workpiece via an fθ lens 84. The main laser beam 95 is launched from a laser oscillator, which is not shown, onto the movable mirror 82 via a mirror 83.

A position detecting laser beam 96 is emitted from a semiconductor laser 86 and formed into a parallel light ray through a collimating lens 87 before it is applied onto the movable mirror 82 at a predetermined angle which is different from the incident angle of the main laser beam 95. The light reflected by the movable mirror 82 is focused on a line sensor 89 via a cylindrical lens 88; as the movable mirror 82 turns, the focusing position moves in the direction of the length of the line sensor 89. In this configuration, the line sensor 89 converts the intensity of light in an acceptance position into an electric signal (e.g. a voltage signal and a current signal) so as to detect the acceptance position; based on the acceptance position, the rotational angle of the movable mirror 82 is detected.

The information on converging position detected by the line sensor 89 is supplied to a deviation signal output circuit 90 as shown in Fig. 12; the deviation signal output circuit 90 issues an analog deviation signal to a D-A converter 91 according to the foregoing positional information. The D-A converter 91 changes the reference voltage of the D-A output according to the deviation signal. The D-A converter 91 converts the position command on the digital signal from an external device or the like, which is not shown, to an analog signal in accordance with the aforesaid reference voltage, and supplies the analog position command to a servo amplifier 92. A position signal from a position detecting sensor (not illustrated) which is included in the galvanoscanner 81 has been supplied to the servo amplifier 92; therefore, the servo amplifier 92 compares the aforesaid analog position command with the position signal from the position detection sensor and controls the rotation of the galvanoscanner 81 so as to bring the difference therebetween to zero. Further, a temperature control amplifier 93 controls the current of a sheet-shaped heater (not shown) which is wrapped around the galvanoscanner 81 to control the heater temperature of the galvanoscanner 81.

In such a configuration, firstly, when the temperature of the galvanoscanner 81 reaches a constant level, the galvanoscanner 81 is set for a maximum amplitude and the laser beam 96 of the semiconductor laser 86 is launched to the movable mirror 82. The positions of the line sensor 89, the semiconductor laser 86, etc. are adjusted in advance so that the reflected light comes back to the center of the length of the line sensor 89. At this time, since the deviation signal from the deviation signal output circuit 90 has been set to zero, the D-A converter 91 does not correct the reference voltage of the output. Thus, the D-A converter 91 does not correct the position command and outputs it to the servo amplifier 92 without changing it.

During operation, if the temperature change occurs due to the ambient temperature of the galvanoscanner 81 or by the heat generated by the galvanoscanner itself, then a temperature drift takes place in the output gain of the position sensor incorporated in the galvanoscanner 81. This causes a change in the swing angle of the movable mirror 82 at the maximum amplitude of the galvanoscanner 81; therefore, the converging position of the laser beam 96 on the line sensor 89 changes. According to the change in the position information from the line sensor 89, the deviation signal output circuit 90 issues a deviation signal to the D-A converter 91, and the D-A converter 91 changes the reference voltage of the output according to the deviation signal. Thus, the digital position command which has been supplied to the D-A converter 91 is subject to gain correction based on the deviation signal before it is supplied to the servo amplifier 92. Hence, the servo amplifier 92 drives the galvanoscanner 81 according to the corrected position command; therefore, the movable mirror 82 is rotated without being affected by a gain drift, thus ensuring accurate positioning of the main laser beam 95.

However, to make such correction by an angle correcting means of the conventional movable mirror 82, the movable mirror 82 is driven to a predetermined angle (the maximum amplitude in the foregoing example) for correction which is different from an angle range which is normally used, and the position command is corrected according to the deviation of the converging position on the line sensor 89 at that angle. For this reason, actual machining operation must be interrupted to carry out such correction, leading to lower operating efficiency of an optical machining apparatus and poor work efficiency.

In addition, when an attempt is made to perform corrections by such a correcting means at an extremely small angle which is normally used, the change in the position where the reflected light of the laser beam 96 from the semiconductor laser 86 is focused on the line sensor is extremely small. At this time, the position detecting resolution of the line sensor 89 is not sufficient to detect the infinitesimal change in the converging position. Therefore, correcting the angle of the movable mirror 82 at such an infinitesimal angle requires a longer optical path for the laser beam 96 from the semiconductor laser 86 to the line sensor 89 via the movable mirror 82.

This, however, requires that the distance between the optical units be increased, making it difficult to be realized because of the restricted size of an optical machining apparatus.

Disclosure of the Invention

The present invention has been made with a view toward solving the problems with the prior art described above, and it is an object of the present invention to provide a mirror angle detecting apparatus and detecting method which enable the detection of an angle deviation of a movable mirror in an infinitesimal angle range which is normally used and also permit reduction in the size of optical machining equipment.

According to a first aspect of the present invention, in a mirror angle detecting apparatus of optical machining equipment which has a movable mirror which rotates while reflecting a main laser beam to machine a workpiece and the rotational angle of which is detected by reflecting a position detecting beam, and a position sensor which detects the rotational angle of the movable mirror by receiving the position detecting beam reflected by the movable mirror; a first mirror for reflecting the main laser beam is formed on one surface of the foregoing movable mirror and a second mirror for reflecting the position detecting beam and leading it to the position sensor is formed on or attached to the other surface of the movable mirror.

With this arrangement, the second mirror reflects the position detecting beam and leads it to the position sensor, and the rotational angle of the movable mirror is detected by the position sensor. Since the second mirror is provided on the different surface from that of the first mirror for reflecting the main laser beam, the surface of the second mirror is not subject to such influences as distortion caused by the heat generated by the main laser beam with a large output power. This enables accurate detection of an infinitesimal rotational angle of the movable mirror by the position detecting beam reflected from the second mirror.

According to a second aspect of the present invention, a mirror angle detecting apparatus of optical machining equipment, which has a movable mirror which rotates while reflecting a main laser beam to machine a workpiece and the rotational angle of which is detected by reflecting a position detecting beam, and a position sensor which detects the rotational angle of the movable mirror by receiving the position detecting beam reflected by the movable mirror, is further equipped with an image forming lens which is provided in an optical path through which the position detecting beam reflected by the movable mirror propagates, and a position sensor provided in an image focal position of the image forming lens.

With this arrangement, the position detecting beam is reflected by the movable mirror and focused on the position sensor which is disposed in the image focal position thereof via the image forming lens. At this time, a shift y of the converging position on the position sensor caused by an infinitesimal rotational angle $\Delta\theta$ of the movable mirror is amplified by a focal distance f of the image forming lens and it is expressed by:

$$y = f \times 2\Delta\theta$$

Thus, even if the infinitesimal rotational angle $\Delta\theta$ of the movable mirror is smaller than the minimum detecting resolution of the position sensor, the shift y in the converging position on the position sensor can be made larger than the foregoing minimum detecting resolution by setting the focal distance f of the image forming lens to a predetermined value. Hence, the mirror angle can be detected in the infinitesimal angle range of the movable mirror which is normally used. In addition, since the image forming lens has only to be disposed in the optical path of the beam reflected by the movable mirror, the resultant optical unit can be made compact, permitting smaller machining equipment.

According to a third aspect of the present invention, an optical system which constitutes an afocal system is provided in the optical path, through which the position detecting beam reflected by the movable mirror propagates, and between the movable mirror and the image forming lens.

With this arrangement, the position detecting beam is reflected by the movable mirror and focused on the position sensor which is disposed in the image focal position thereof via the optical system constituting the afocal system and the image forming lens. This amplifies the focal distance f of the image forming lens by the ratio of the focal distance of the optical system making up the afocal system. Hence, an image forming lens of an equivalently large focal distance can be obtained and the shift y of the converging position on the position sensor can be made larger than the minimum detection resolution of the position sensor by setting the ratio of the focal distance of the optical system to a predetermined value. As a result, the mirror angle can be detected in the infinitesimal angle range of the movable mirror which is normally used. Moreover, since these image forming lens and the optical system have only to be provided in the optical path, the optical unit can be made compact and the machining equipment can be accordingly made smaller.

Accordiical system which extends the optical path by repeating reflection is provided in the optical path, through which the position detecting beam reflected by the movable mirror propagates, and between the movable mirror and the image forming lens.

With this arrangement, the position detecting beam is reflected by the movable mirror and focused on the position sensor via the optical system which extends the optical path by repeating the reflection. This makes an overall optical path length L from the movable mirror to the position sensor including the optical path of the optical system longer than a physical dimension $L_R$ from the movable mirror to the position sensor. At this time, the shift y of the converging position on the position sensor caused by the infinitesimal rotational angle $\Delta\theta$ of the movable mirror is amplified by the overall optical path length L of the optical system and it is expressed by:

$$y = L \times 2\Delta\theta$$

Thus, even if the infinitesimal rotational angle $\Delta\theta$ of the movable mirror is smaller than the minimum detection resolution of the position sensor, the shift y in the converging position on the position sensor can be made larger than the foregoing minimum detecting resolution by setting the optical path of the optical system, which extends the optical path by repeating the reflection, to a predetermined value. Hence, the mirror angle can be detected in the infinitesimal angle range of the movable mirror which is normally used. In addition, since the optical system which extends the optical path by repeating the reflection has only to be disposed in the optical path of the beam reflected by the movable mirror, the resultant optical unit can be made compact, permitting smaller machining equipment.

According to a fifth aspect of the present invention, in a mirror angle detecting method for optical machining equipment wherein a rotatable movable mirror is used to reflect a main laser beam to machine a workpiece and the rotational angle of the movable mirror is detected by receiving the position detecting beam, which has been reflected by the movable mirror, by a position sensor; the main laser beam for machining is reflected by a first mirror formed on one surface of the foregoing movable mirror for machining, and the position detecting beam is launched onto a second mirror formed on or attached to the other surface of the movable mirror and the beam reflected by the second mirror is received by the foregoing position sensor.

With this arrangement, the second mirror reflects the position detecting beam and leads it to the position sensor, and the rotational angle of the movable mirror is detected by the position sensor. Thus, the surface of the second mirror is not subject to such influences as distortion caused by the heat generated by the main laser beam with a large output power. This enables accurate detection of an infinitesimal rotational angle of the movable mirror by the position detecting beam reflected from the second mirror.

According to a sixth aspect of the present invention, in a mirror angle detecting method for optical machining equipment wherein a rotatable movable mirror is used to reflect a main laser beam to machine a workpiece and the rotational angle of the movable mirror is detected by receiving the position detecting beam, which has been reflected by the movable mirror, by a position sensor; the shift of the rotational angle of the movable mirror is amplified and converted to a shift of the converging position on the position sensor by letting the position detecting beam reflected by the movable mirror in an image forming lens and by receiving the beam emitted from the image forming lens by the position sensor disposed in the image focal position of the image forming lens.

With this arrangement, the position detecting beam is reflected by the movable mirror and focused on the position sensor which is disposed in the image focal position thereof via the image forming lens. At this time, a shift y of the converging position on the position sensor caused by an infinitesimal rotational angle $\Delta\theta$ of the movable mirror is amplified by a focal distance f of the image forming lens and it is expressed by:

$$y = f \times 2\Delta\theta$$

Thus, even if the infinitesimal rotational angle $\Delta\theta$ of the movable mirror is smaller than the minimum detecting resolution of the position sensor, the shift y in the converging position on the position sensor can be made larger than the foregoing minimum detecting resolution by setting the focal distance f of the image forming lens to a predetermined value. Hence, the mirror angle can be detected in the infinitesimal angle range of the movable mirror which is normally used. In addition, since the image forming lens has only to be disposed in the optical path of the beam reflected by the movable mirror, the resultant optical unit can be made compact, permitting smaller machining equipment.

According to a seventh aspect of the present invention, the position detecting beam reflected by the movable mirror is let in an optical system constituting an afocal system, and the position detecting beam emitted from the optical system constituting the afocal system is let in the image forming lens, then the beam emitted from the image forming lens is received by the position sensor.

With this arrangement, the position detecting beam is reflected by the movable mirror and focused on the position sensor which is disposed in the image focal position thereof via the optical system constituting the afocal system and the image forming lens. This amplifies the focal distance f of the image forming lens by the ratio of the focal distance of the optical system making up the afocal system. Hence, an image forming lens of an equivalently large focal distance can be obtained and the shift y of the converging position on the position sensor can be made larger than the minimum detection resolution of the position sensor by setting the ratio of the focal distance of the optical system to a predetermined value. As a result, the mirror angle can be detected in the infinitesimal angle range of the movable mirror which is normally used. Moreover, since these image forming lens and the optical system have only to be provided in the optical path for the beanit can be made compact and the machining equipment can be accordingly made smaller.

According to an eighth aspect of the present invention, the position detecting beam reflected by the movable mirror is launched into an optical system which extends the optical path by repeating reflection, and the beam emitted from the optical system which extends the optical path by repeating the reflection is let in the image forming lens, then the beam emitted from the image forming lens is received by the position sensor.

With this arrangement, the position detecting beam is reflected by the movable mirror and focused on the position sensor via the optical system which extends the optical path by repeating the reflection. This makes an overall optical path length L from the movable mirror to the position sensor including the optical path of the optical system longer than a physical dimension $L_R$ from the movable mirror to the position sensor. At this time, the shift y of the converging position on the position sensor caused by the infinitesimal rotational angle $\Delta\theta$ of the movable mirror is amplified by the overall optical path length L of the optical system and it is expressed by:

$$y = L \times 2\Delta\theta$$

Thus, even if the infinitesimal rotational angle $\Delta\theta$ of the movable mirror is smaller than the minimum detection resolution of the position sensor, the shift y in the converging position on the position sensor can be made larger than the foregoing minimum detecting resolution by setting the optical path of the optical system, which extends the optical path by repeating the reflection, to a predetermined value. Hence, the mirror angle can be detected in the infinitesimal angle range of the movable mirror which is normally used. In addition, since the optical system which extends the optical path by repeating the reflection has only to be disposed in the optical path for the beam reflected by the movable mirror, the resultant optical unit can be made compact, permitting smaller machining equipment.

Brief Description of the Drawings

Fig. 1 is a basic explanatory diagram of a mirror angle detecting apparatus and detecting method in accordance with the present invention.

Fig. 2 is an explanatory diagram of a change in a reflection angle in the mirror shown in Fig. 1.

Fig. 3 is an explanatory diagram of a displacement in the detection position in a position detecting sensor shown in Fig. 1.

Fig. 4 is a block diagram of a mirror angle detecting apparatus of a first embodiment in accordance with the present invention.

Fig. 5 is an explanatory diagram of the operation of respective lenses shown in Fig. 4.

Fig. 6 is an explanatory diagram of a case wherein the operations of the respective lenses shown in Fig. 4 are replaced by the operation of a single lens.

Fig. 7 is an explanatory diagram of the operation of the single lens shown in Fig. 6.

Fig. 8 is a block diagram of a mirror angle detecting apparatus of a second embodiment in accordance with the present invention.

Fig. 9 is a block diagram of a mirror angle detecting apparatus of a third embodiment in accordance with the present invention.

Fig. 10 is a block diagram of a mirror angle detecting apparatus of a fourth embodiment in accordance with the present invention.

Fig. 11 is a block diagram of a laser beam scanner which has an angle correcting means of a movable mirror according to a prior art.

Fig. 12 is a block diagram showing a control system for the angle correcting means for the movable mirror shown in Fig. 11.

Best Mode for Carrying out the Invention

The embodiments of the mirror angle detecting apparatus and detecting method in accordance with the present invention will be described with reference to the accompanying drawings.

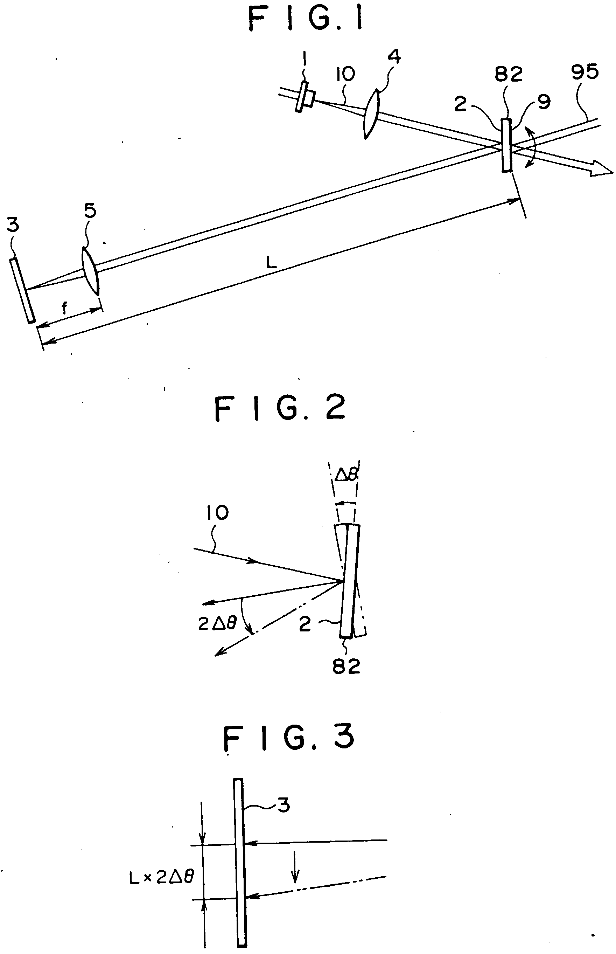

Firstly, the basic idea of a solving means in accordance with the present invention will be described in conjunction with Fig. 1 through Fig. 3.

Fig. 1 is a block diagram illustrating the basic idea. The main laser beam 95 for machining is oscillated by a laser oscillator which is not shown; it is reflected by a first mirror 9 formed on one surface of the movable mirror 82 and applied to a workpiece. The movable mirror 82 is driven and rotated by a galvanoscanner which receives an angle command via a control unit and a servo amplifier which are not shown. A light source 1 emits a position detecting beam 10; it is composed of, for example, a semiconductor laser, a light emitting diode, etc. The light emitted by these light sources has a somewhat diverging angle; it is formed into a parallel light ray through a collimator lens 4. The parallel light ray is applied to a second mirror 2 which is formed on or attached to a different surface from that of the first mirror 9 of the movable mirror 82; the light ray reflected by the second mirror 2 is focused on a position sensor 3 through an image forming lens 5. The second mirror 2 is provided on the different surface from that of the first mirror 9 which reflects the main laser beam so as to protect the surface of the second mirror 2 from adverse influences such as distortion caused by the heat generated by the main laser beam 95 which has a high output power. This permits accurate detection of the infinitesimal angle of the movable mirror 82 by the light rays reflected by the second mirror 2.

The position sensor 3 is capable of detecting a position by means of the intensity of a light ray in the position where the light ray is received; it is a position sensor composed of, for example, a charge-coupled device (CCD), a position sensing detector (PSD), or the like. The optical path length from the movable mirror 82 to the position sensor 3 is denoted as L.

In Fig. 1, the light ray is formed into a parallel light ray through the collimator lens 4 and then focused through the image forming lens 5; however, it is also possible to directly focus the light rays on the position sensor 3 through the image forming lens 5.

If it is assumed that the movable mirror 82 has turned by a rotational angle $\Delta\theta$ as shown in Fig. 2, the direction of the beam reflected by the movable mirror 82 is turned by $2\Delta\theta$ in the same direction as the rotational angle $\Delta\theta$. At this time, since the optical path length is denoted as L, the converging position on the position sensor 3 is shifted approximately by a distance expressed by:

$$L \times 2\Delta\theta$$

In this case, however, it is assumed that a distance f between the image forming lens 5 and the position sensor 3 (the focal position of the image forming lens 5) is smaller than the optical path length L. Thus, the rotational angle $\Delta\theta$ of the movable mirror 82 is detected by the position sensor 3 from the foregoing shift distance. There are cases, however, wherein the shift distance of the converging position on the position sensor 3 is smaller than the minimum detection resolution of the position sensor 3 when the angle $\Delta\theta$ is an infinitesimal angle. In such a case, the shift distance of the converging position on the position sensor 3 cannot be detected.

Since the shift distance of the converging position on the position sensor 3 is expressed by $L \times 2\Delta\theta$, two basic ideas set forth below are available as an approach to solve the aforesaid problem.

(1) To increase the coefficient for the rotational angle $\Delta\theta$, i.e. to amplify the angle.
The coefficient in this case refers to the coefficient for amplifying the infinitesimal rotational angle of the light rays reflected by the movable mirror 82. In Fig. 1, the coefficient is fixed to 2.
(2) To increase the optical path length L.

In Fig. 1, simply increasing the optical path length L would increase the distance between the optical units accordingly, and the entire machining equipment would be larger, making it impractical.

Based on the ideas described above, a first embodiment wherein a larger coefficient for the rotational angle $\Delta\theta$ is used will be described in detail.

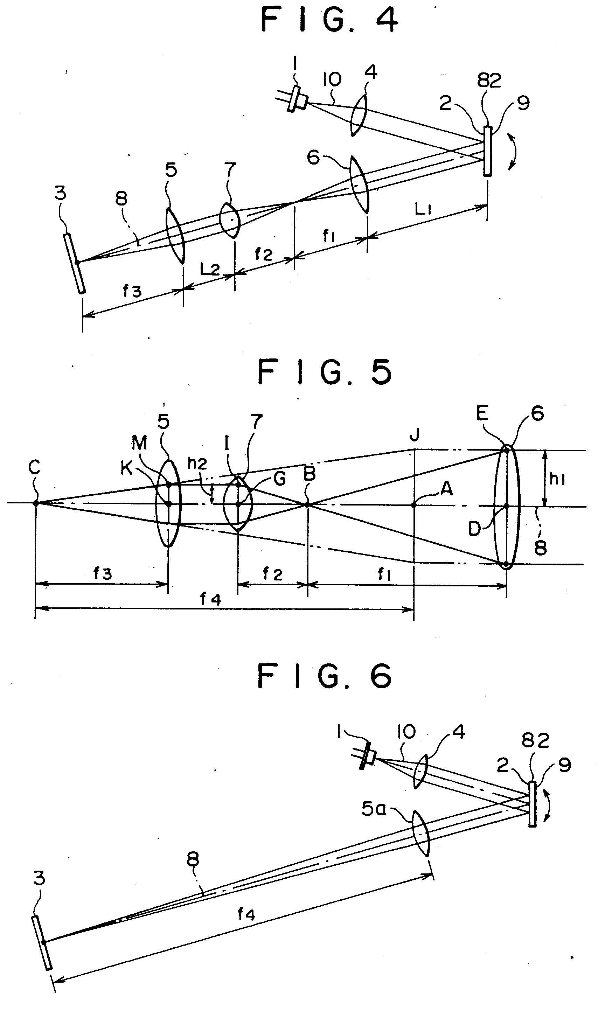

In Fig. 4, like components as those shown in Fig. 1 will be assigned like reference numerals and the description thereof will be omitted. The position detecting beam 10 which has been turned into a parallel ray through the collimator lens 4 is reflected by the second mirror 2 of the movable mirror 82, and the light ray reflected by the second mirror 2 is let in a first lens 6 which is away from the movable mirror 82 by an optical path $L_1$. The light ray emitted from the first lens 6 is focused on the position sensor 3 via a second lens 7 and the image forming lens 5. The first lens 6 has a focal distance $f_1$ and the second lens 7 has a focal distance $f_2$; the respective lenses are disposed so that the image focus of the first lens 6 coincides with the object focus of the second lens 7. The image forming lens 5 has a focal distance $f_3$; the image forming lens is disposed so that the image focus of the image forming lens 5 coincides with the intersection of the detecting surface of the position sensor 3 and an optical axis 8.

The operations of the respective lenses 6, 7, and 5 in such a configuration will be described in conjunction with Fig. 5. Fig. 5 detailedly illustrates a lens which combines the first lens 6, the second lens 7, and the image forming lens 5. In the drawing, the intersections between the respective lenses 6, 7, 5 and an optical axis 8 are denoted as D, G, and K; the position of the image focus of the first lens 6 (the object focus of the second lens 7) is denotes as B; and the image focus of the image forming lens 5 (tmaximum diverging width on one side of the parallel light ray launched in the first lens 6 is denoted as $h_1$; a point at a distance of the diverging width $h_1$ from the intersection D in the first lens 6 is denoted as E; a point at a distance of a maximum diverging width $h_2$ on one side from the point D where the light ray emitted from the first lens 6 reaches the second lens 7 via the focus B is denoted as I; and a point at a distance of a maximum diverging width $h_2$ on one side from the point K where the parallel light ray emitted from the second lens 7 reaches the image forming lens 5 is denoted as M. Furthermore, the line connecting the point C and the point M is extended toward the incident side of the image forming lens 5; the intersection of this line and the line which is extended from the point E of the first lens 6 in parallel to the optical axis 8 is denoted as J; and the intersection of the line, which is drawn from the point J in parallel to a line segment ED, and the optical axis 8 is denoted as A.

At this time, a triangle DEB and a triangle GIB are similar; therefore, the following expression will apply:

$$f_1 / h_1 = f_2 / h_2$$

Likewise, a triangle AJC and a triangle KMC are similar; therefore, the following expression applies:

$$f_4 / h_1 = f_3 / h_2$$

From the expressions given above, the following expression is derived:

$$f_4 = (f_1/f_2) \times f_3$$

In the expression, $f_4$ indicates the focal distance of the lens which is composed of the combination of the first lens 6, the second lens 7, and the image forming lens 5. Hence, the configuration shown in Fig. 4 can be replaced by the configuration in which a single image forming lens 5a having the focal distance $f_4$ illustrated in Fig. 6 is employed.

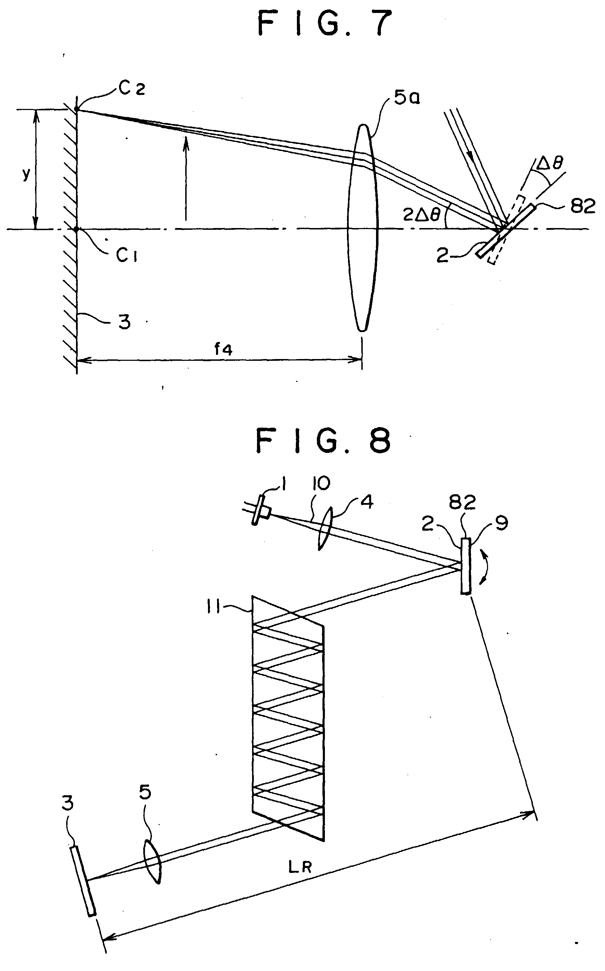

Fig. 7 illustrates the operation performed by the single image forming lens 5a for amplifying the rotational angle of the movable mirror 82. It is assumed that the parallel light ray reflected by the movable mirror 82 is let in the image forming lens 5a and the light ray emitted from the image forming lens 5a is focused at a point $C_1$ on the position sensor 3 in a position which coincides with the focal distance $f_4$. Under this condition, it is well known that, when the movable mirror 82 moves by $\Delta\theta$, the shift distance y of a converging position $C_2$ from the focal point $C_1$ on the position sensor 3 is expressed as:

$$y = f_4 \times \tan(2 \Delta\theta)$$

When the rotational angle $\Delta\theta$ is an infinitesimal angle, the following expression applies:

$$\tan(2 \Delta\theta) = 2 \Delta\theta$$

Thus, the aforesaid shift distance y is expressed as:

$$y = f_4 \times 2 \Delta\theta$$

It becomes possible, therefore, to increase the coefficient for the rotational angle $\Delta\theta$ by means of the focal distance $f_4$ of the combined lens.

Using the foregoing expression

$$f_4 = (f_1/f_2) \times f_3;$$

the focal distance $f_4$ of the combined lens can be set to a predetermined value by setting the focal distance ratio of $f_1$ to $f_3$ of the first lens 6 and the second lens 7 to a predetermined magnitude. As described above, the focal distance $f_4$ can be determined as a value obtained by multiplying the focal distance $f_3$ of the image forming lens 5 by the focal distance ratio $f_1/f_2$; this configuration, therefore, permits a physically smaller size than can be achieved by the configuration using the single image forming lens 5a which has a focal distance corresponding to the focal distance $f_4$. Hence, the use of such a combination of lens makes it possible to amplify the rotational angle $\Delta\theta$ by the lenses which provide an equivalently larger focal distance and to reduce the size of the entire machining equipment.

As it has been described, in the combination of the first lens 6 and the second lens 7, the incident light ray which is parallel to the optical axis 8 is emitted in parallel to the optical axis 8. This optical system is referred to as an optical system constituting an afocal system. Constructing the lens with an equivalently longer focal distance by using the combination of lenses as in this embodiment can generally be achieved by the optical system constituting the afocal system. More specifically, the optical system constituting the afocal system is provided between the movable mirror 82 and the image forming lens 5, a parallel light ray is let into the optical system constructing the afocal system, and the light ray emitted from the optical system constituting the afocal system is let into the image forming lens 5 before it is focused on the position sensor 3. The ratio of the focal distance of the optical system constituting the afocal system is set to a predetermined value, thereby enabling the equivalent image forming lens 5a of the predetermined focal distance to be achieved as in the case described above. As a result, the rotational angle $\Delta\theta$ of the movable mirror 82 can be amplified and the size of the entire machining equipment can be reduced.

A second embodiment wherein the optical path length L is increased will now be described in detail with reference to Fig. 8. Like components as those in the first embodiment will be assigned like reference numerals, and the description thereof will be omitted. In this embodiment, a prism 11 is provided between the movable mirror 82 and the image forming lens 5 and in the optical path through which the light ray reflecparallel light ray which has been let in the prism 11 repeats a predetermined number of reflections in the prism 11 before it leaves the prism from the opposite side, then it is let in the image forming lens 5 and focused on the position sensor 3.

In this embodiment, the prism 11 is used as an optical system which extends the optical path by repeating the reflection. This causes the overall optical length L from the movable mirror 82 to the position sensor 3 including the optical path of the optical system to become longer than a physical dimension $L_R$ from the movable mirror 82 to the position sensor 3. As previously mentioned, when the movable mirror 82 turns by the infinitesimal angle $\Delta\theta$, the shift distance y of the converging position on the position sensor 3 is expressed by:

$$y = L \times 2 \, \Delta\theta$$

Therefore, the shift distance y of the converging position can be amplified by increasing the optical path length L of an actual reflected light ray. As a result, the converging position can be moved by a value which is larger than the minimum detection resolution of the position sensor 3, permitting easier detection of the infinitesimal rotational angle $\Delta\theta$ and also permitting a reduced size of the entire machining equipment.

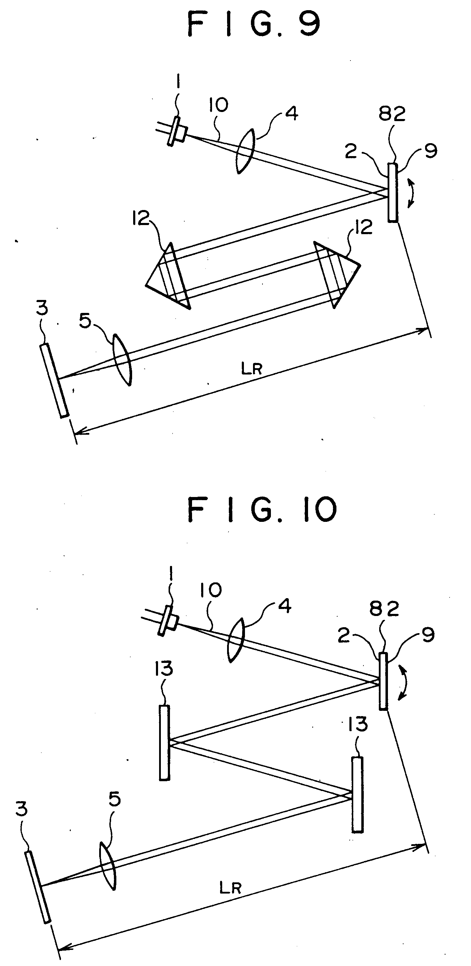

A third embodiment wherein a triangular prism 12 is employed to extend the optical path length L will now be described in detail with reference to Fig. 9. Like components as those in the first to second embodiments will be assigned the same reference numerals and the description thereof will be omitted. In this embodiment, two triangular prisms 12, 12 are provided in the optical path of the light ray reflected by the movable mirror 82; the right-angle of the first triangular prism 12 receives the incident light ray and emits the reflected light ray which is then led to the second triangular prism 12. The light ray emitted from the second triangular prism 12 is focused on the position sensor 3 via the image forming lens 5. The number of the triangular prisms 12 is not limited to two as illustrated in Fig. 9 although there should be at least one. Thus, in this embodiment, the two triangular prisms 12, 12 are employed as the optical system which extends the optical path thereof by repeating the reflection.

The overall optical path length L from the movable mirror 82 to the position sensor 3 including the optical path of the optical system becomes longer than the physical dimension $L_R$ from the movable mirror 82 to the position sensor 3. Thus, as in the case previously described, when the movable mirror 82 is turned only by the infinitesimal angle $\Delta\theta$, the shift distance y of the converging position on the position sensor 3 can be amplified, thereby permitting a larger shift of the converging position than the minimum detecting resolution of the position sensor 3. As a result, the detection of the infinitesimal angle $\Delta\theta$ of the movable mirror 82 becomes easier and the size of the entire machining equipment can be reduced.

A fourth embodiment wherein a fixed mirror 13 is used to extend the optical path length L will be described in detail with reference to Fig. 10. Like components as those in the first to third embodiments will be assigned the same reference numerals and the description thereof will be omitted. In this embodiment, two fixed mirrors are provided in the optical path of the light ray reflected by the movable mirror 82; the reflecting surface of the first fixed mirror 13 reflects the incident light ray which is then led to the second fixed mirror 13. The light ray reflected by the second fixed mirror 13 is focused on the position sensor 3 via the image forming lens 5. The number of the fixed mirrors 13 is not limited to two as illustrated in Fig. 10 although there should be at least one. Thus, in this embodiment also, the two fixed mirrors 13, 13 are employed as the optical system which extends the optical path thereof by repeating the reflection.

The overall optical path length L from the movable mirror 82 to the position sensor 3 including the optical path of the optical system becomes longer than the physical dimension $L_R$ from the movable mirror 82 to the position sensor 3. Thus, as in the case previously described, when the movable mirror 82 is turned only by the infinitesimal angle $\Delta\theta$, the shift distance y of the converging position on the position sensor 3 can be amplified, thereby permitting a larger shift of the converging position than the minimum detecting resolution of the position sensor 3. As a result, the detection of the infinitesimal angle $\Delta\theta$ of the movable mirror 82 becomes easier and the size of the entire machining equipment can be reduced.

Industrial Applicability

According to the present invention, the angle deviation of a movable mirror can be detected in an infinitesimal angle range which is normally used in optical machining equipment which employs a galvanoscanner to scan with optical beams; it is also useful as a mirror angle detecting apparatus and detecting method which enable reduction in the size of the optical machining equipment.

**Claims**

1.  In a mirror angle detecting apparatus for optical machining equipment having a movable mirror (82) which rotates while reflecting a main laser beam (95) to machine a workpiece and the rotational angle of which is detected by reflecting a position detecting beam (10), and a position sensor (3) which detects the rotational angle of said movable mirror by receiving the position detecting beam reflected by said movable mirror, said mirror angle detecting apparatus comprising:

    a first mirror (9) for reflecting said main laser beam (95) which is formed on one surface of said movable mirror (82), and a second mirror (2) for reflecting said position detecting beam (10) and leading it to said position sensor (3) which is formed on or attached to the other surface of said movable mirror.

2. In a mirror angle detecting apparatus for optical machining equipment having a movable mirror (82) which rotates while reflecting a main laser beam (95) to machine a workpiece and the rotational angle of which is detected by reflecting a position detecting beam (10), and a position sensor (3) which detects the rotational angle of said movable mirror by receiving the position detecting beam reflected by said movable mirror, said mirror angle detecting apparatus comprising:

an image forming lens (5) which is provided in an optical path through which said position detecting beam (10) reflected by said movable mirror (82) propagates, and a position sensor (3) provided in an image focal position of the image forming lens.

3. A mirror angle detecting apparatus according to Claim 2, wherein an optical system (6, 7) which constitutes an afocal system is provided in an optical path, through which said position detecting beam (10) reflected by the movable mirror (82) propagates, and between the movable mirror and said image forming lens (5).

4. A mirror angle detecting apparatus according to Claim 2, wherein an optical system (11, 12, 13) which extends the optical path by repeating reflection is provided in an optical path, through which said position detecting beam (10) reflected by the movable mirror (82) propagates, and between the movable mirror and said image forming lens (5).

5. In a mirror angle detecting method for optical machining equipment, a rotatable movable mirror (82) is used to reflect a main laser beam (95) to machine a workpiece and the rotational angle of said movable mirror is detected by receiving the position detecting beam (10), which has been reflected by the movable mirror, by a position sensor (3),
said mirror angle detecting method, wherein said main laser beam (95) is reflected by a first mirror (9) formed on one surface of said movable mirror (82) to perform machining, and said position detecting beam (10) is applied to a second mirror (2) formed on or attached to the other surface of said movable mirror, then the beam reflected by the second mirror is received by said position sensor (3).

6. In a mirror angle detecting method for optical machining equipment, a rotatable movable mirror (82) is used to reflect a main laser beam (95) to machine a workpiece and the rotational angle of said movable mirror is detected by receiving the position detecting beam (10), which has been reflected by the movable mirror, by a position sensor (3),
said mirror angle detecting method, wherein the shift of the rotational angle of said movable mirror is amplified and converted to a shift of the converging position on said position sensor by letting said position detecting beam (10) reflected by the movable mirror (82) in an image forming lens (5) and by receiving the beam emitted from said image forming lens by said position sensor (3) disposed in the image focal position of said image forming lens.

7. A mirror angle detecting method according to Claim 6, wherein said position detecting beam (10) reflected by the movable mirror (82) is let in an optical system (6, 7) constituting an afocal system, and the beam emitted from the optical system constituting said afocal system is let in said image forming lens (5), then the beam emitted from the image forming lens is received by said position sensor (3).

8. A mirror angle detecting method according to Claim 6, wherein said position detecting beam (10) reflected by the movable mirror (82) is let into an optical system (11, 12, 13) which extends the optical path by repeating reflection, and the beam emitted from the optical system which extends the optical path by repeating the reflection is let in said image forming lens (5), then the beam emitted from the image forming lens is received by said position sensor.

# F I G. 1

# F I G. 2

# F I G. 3

# FIG. 4

# FIG. 5

# FIG. 6

# FIG. 7

# FIG. 8

# F I G. 9

# F I G. 10

# F I G. II PRIOR ART

# F I G. I2 PRIOR ART

## INTERNATIONAL SEARCH REPORT

| | International application No. |
|---|---|
| | PCT/JP96/03538 |

**A. CLASSIFICATION OF SUBJECT MATTER**

Int. $Cl^6$ G02B26/10

According to International Patent Classification (IPC) or to both national classification and IPC

**B. FIELDS SEARCHED**

Minimum documentation searched (classification system followed by classification symbols)

Int. $Cl^6$ G02B26/10, G01B11/00

Documentation searched other than minimum documentation to the extent that such documents are included in the fields searched

| Jitsuyo Shinan Koho | 1926 - 1995 |
|---|---|
| Kokai Jitsuyo Shinan Koho | 1971 - 1995 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | Microfilm of the specification and drawings annexed to the written application of Japanese Utility Model Application No. 110785/1989 (Laid-open No. 49522/1991) (NEC Corp.), May 15, 1991 (15. 05. 91), Page 1, line 16 to page 2, line 2; page 4, lines 9 to 18; Fig. 1 (Family: none) | 1-3, 5-7<br>4, 8 |
| Y<br>A | JP, 6-289305, A (Olympus Optical Co., Ltd.), October 18, 1994 (18. 10. 94), Page 3, right column, lines 15 to 30; Fig. 2 (Family: none) | 1, 5<br>4, 8 |
| Y<br>A | JP, 2-7001, B2 (Hitachi, Ltd.), February 15, 1990 (15. 02. 90), Page 2, left column, lines 23 to 25; page 3, left column, lines 8 to 30; Fig. 4 (Family: none) | 2, 3, 6, 7<br>4, 8 |
| A | JP, 52-113750, A (Canon Inc.), September 24, 1977 (24. 09. 77), | 4, 8 |

| X | Further documents are listed in the continuation of Box C. | | See patent family annex. |
|---|---|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| February 18, 1997 (18. 02. 97) | March 4, 1997 (04. 03. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP96/03538

| C (Continuation). | DOCUMENTS CONSIDERED TO BE RELEVANT | |
|---|---|---|
| Category* | Citation of document, with indication, where appropriate, of the relevant passages | Relevant to claim No. |
| | Page 3, upper left column, line 10 to lower right column, line 16; Figs. 6, 10<br>& US, 4130339, A | |

Form PCT/ISA/210 (continuation of second sheet) (July 1992)